# EUROPEAN PATENT APPLICATION

(11) **EP 4 793 769 A1**
(43) Date of publication of application: **19.08.2026**
(21) Application number: 25188245.2
(22) Date of filing: 08.07.2025
(51) Int. Cl.: G06F 9/455, G06F 8/61

(54) **METHOD AND SYSTEM FOR SECURELY DEPLOYING HYPERVISOR MONITOR TO ENFORCE CONFIDENTIAL COMPUTE ENVIRONMENT FOR GUEST VIRTUAL MACHINES**

(30) Priority: 14.02.2025 IN 202541012847
(71) Applicant: NXP B.V., 5656 AG Eindhoven (NL)
(72) Inventor: Sethi, Varun, 5656AG Eindhoven (NL)
(74) Representative: Schwarzweller, Thomas

(57) **Abstract**

A method is described which monitors hypervisor execution and controls hypervisor features to enforce a confidential computing environment.

## Description

### FIELD

The invention relates to a method and system. Particularly, but not exclusively, the invention relates to a computer-implemented method and system. Further particularly, but not exclusively, the invention relates to a method and system for securely deploying a hypervisor monitor to enforce confidential compute environments for guest virtual machines.

### BACKGROUND

Virtual machines create virtual hardware which provide the portability and scalability which are needed by many organisations. They are often used to enable multiple operating systems to be used, consolidate servers, create testing and development environments, support development operations, enable workload migration, improve disaster recovery and create hybrid environments.

Virtual machines are created and run by hypervisors which allow a host computer to support one or more guest virtual machines by virtually sharing resources. This arrangement, however, is vulnerable to malicious activity where a malicious entity gains control of a hypervisor to access and manipulate virtual machines which are running using the host computer. This means that privileged operations, such as accessing or reading and writing to privileged registers, can be compromised.

Aspects and embodiments were conceived with the foregoing in mind.

### SUMMARY

Aspects relate to the deployment of a hypervisor monitor to enable it to monitor access to privileged register by a hypervisor.

Viewed from a first aspect, there is provided a computer-implemented method of deploying a hypervisor monitor. The method implemented by a processing resource. The processing resource may be implemented in hardware or software by any suitable entity. The method may comprise determining access by a hypervisor to a privileged register. Responsive to the determination of access by the hypervisor to the privileged register, the method may comprise installing a hypervisor monitor by one or more of the following steps:
- verifying the instantiation of a hypervisor exception vector;
- loading the hypervisor monitor to memory on the hypervisor;
- configuring the hypervisor monitor to store a vector base address register value to enable the hypervisor monitor to control exceptions at hypervisor privilege level
- replacing of the hypervisor privilege operations with a corresponding hypervisor monitor stub to control access to privilege registers.

A method in accordance with the first aspect enables access to privileged registers by hypervisors to be monitored and functionality at the hypervisor to be controlled by a hypervisor monitor. This enables the enforcement of a confidential computing environment.

Hypervisor privilege operations may be described as actions that a hypervisor performs to control access to hardware resources and ensure the security of virtual machines which are managed by the hypervisor.

Optionally, wherein the hypervisor privilege operations may be one or more of virtual machine page table setup, virtual machine identification assignment, register state save and restore operations for the virtual CPU associated with a virtual machine. The page table setup may be, for example, stage 2 page table setup.

Optionally, the determination of access to a privileged register may comprise the determination of access to a hypervisor architecture feature trap register.

Optionally, the determination of access to a hypervisor architecture feature trap register may comprise a determination that a trap has been triggered when the hypervisor accesses the privileged register.

Optionally, the loading of the hypervisor monitor onto memory comprises the setup of memory protection for the memory of the hypervisor monitor.

Optionally, the hypervisor vector base address register value may be setup with a magic value by the boot firmware before the hypervisor initialization happens.

Optionally, the verification of the instantiation of the hypervisor exception vector may comprise verification of the value of the vector base address value.

Optionally, control of access to the privileged register may be returned to the hypervisor if the initialisation is not complete.

Optionally, replacing at least one function of the hypervisor with a corresponding hypervisor monitor stub may comprise performing a dynamic binary translation of hypervisor code corresponding to the corresponding functionality of the at least one function.

Optionally, wherein installation of the hypervisor monitor may be implemented by boot firmware.

Optionally, the installation of the hypervisor monitor may be performed responsive to detection of the hypervisor being setup on an application core

Optionally, the method may enforce a confidential compute environment.

Optionally, the method may protect guest virtual machines associated with the hypervisor from malicious hypervisor behaviour.

Optionally, the privileged register may be a control register.

Optionally, the access to a privileged register is associated with a privileged instruction.

Non-transitory computer readable storage media, systems and processing resources may also be provided which are configured to provide a method in accordance with the first aspect.

### DESCRIPTION

An embodiment will now be described by way of example only and with reference to the following drawings in which:
Figure 1 illustrates a series of steps to be used as part of a computer-implemented method of deploying a hypervisor monitor in accordance with the embodiment; and
Figure 2 schematically illustrates the interaction between a processing resource and a hypervisor in accordance with the embodiment.

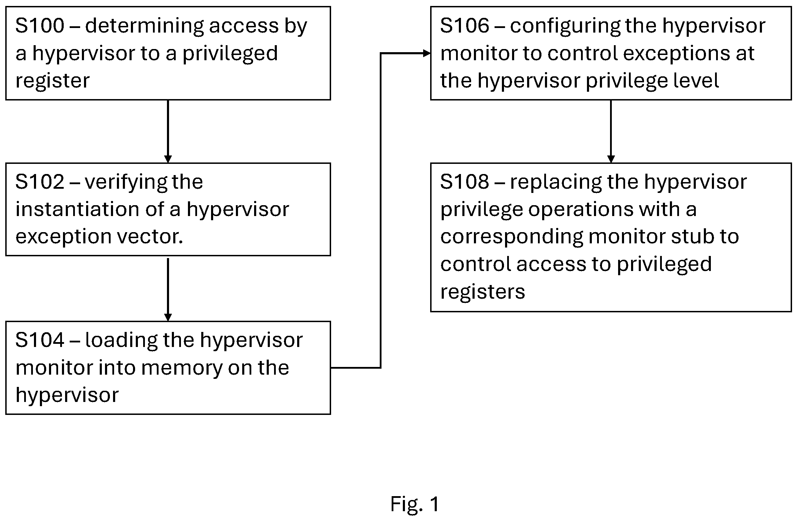

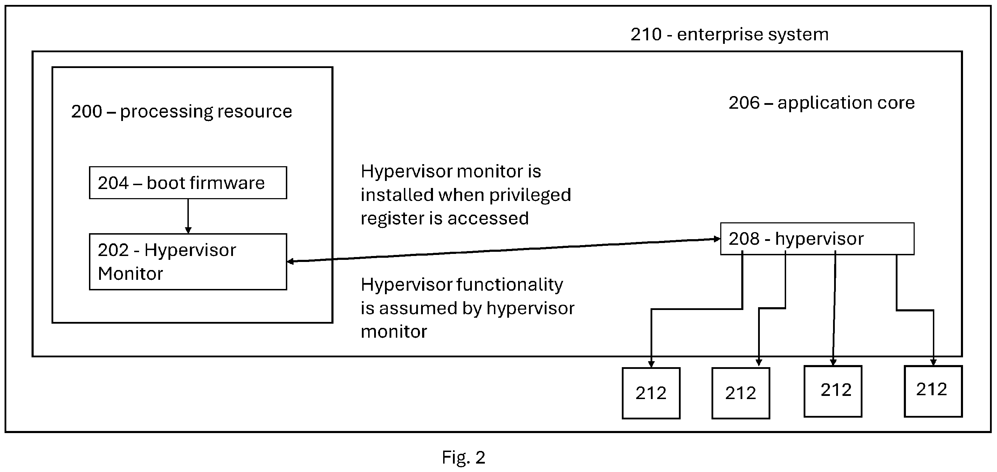

We now describe, with reference to Figures 1 to 3, a method which enables the secure deployment of a hypervisor monitor to enforce a confidential compute environment for guest virtual machines. This may be applied in the enforcement of a confidential compute environment which is implemented on an application core 206 such as, for example, an ARM^{®}v8 application core where a plurality of central processing units can be utilised to provide a computing environment which implements a plurality of virtual machines 212. The virtual machines 212 may be used by an enterprise organisation to run programs and operating systems, store data, connect to networks and perform other computing functions (e.g. secure computing). Virtual machines may be referenced using the acronym VM.

The method deploys a hypervisor monitor 202 which is installed using boot firmware 204 which forms at least part of a processing resource 200 or which is provided by the processing resource 200. As is set out below, the hypervisor monitor 202 is installed by the boot firmware 204 when it detects a hypervisor 208 being set up on the application core 206 as part of an enterprise system 210, for example. Enterprise system 210 may be used at or by an organisation to implement computational operations which may implement management or allocation of data or computational resources. Example applications may also implement secure or confidential computing.

As is set out below, the hypervisor monitor 202 is securely deployed and the described embodiment ensures that the hypervisor monitor 202 cannot be tampered with by any entity within the system 210. The hypervisor monitor 202 is executed at the same level of privilege as the hypervisor (EL2) 208, i.e. at the hypervisor privilege level in the example ARMv8 specification. This method is applicable to any type of hypervisor. This prevents the hypervisor from accessing the machine code which is running the virtual machines 212 which are managed by the hypervisor or data which is being processed by the virtual machines 212. That is to say, the virtual machines are executing under the supervision of hypervisor 208 in that the hypervisor 208 creates and manages the virtual machines, pools and allocates resources (to those virtual machines) such as, for example, memory, storage and central processing unit (CPU) capacity. The hypervisor 208 may also allow multiple operating systems to run on a single host machine.

The hypervisor monitor once deployed takes control of, for example, the memory management unit (MMU) page tables and exception vectors at the hypervisor (EL2) privilege level. The monitor controls both the stage 1 translation tables for EL2 and the stage 2 translation tables for the virtual machines 212. By virtue of this control the monitor can prevent any malicious intervention by the hypervisor.

The hypervisor monitor 202 may be a trusted entity which is authenticated by the boot firmware 208 when it is installed. The trusted relationship may be established using any suitable approach. Using the method we describe below, the mechanism that the hypervisor monitor would employ to take control of hypervisor functionality (e.g. virtual machine identification (VMID) assignment, stage 2 page table setup) and therefore preventing a malicious hypervisor, or a trusted hypervisor which has been infiltrated by a malicious entity, from influencing a state of one or more virtual machines 212.

The hypervisor monitor 202 is deployed by the boot firmware in the processing resource 200 following the establishment of a chain of trust between the hypervisor monitor 202 and the boot firmware and the application core 206. The root of trust component 212 (associated with the chain of trust) is embedded in the application core 206. The hypervisor monitor 202 ensures the security of the machine code and data associated with the virtual machines 212. This protection occurs at runtime of the system 212.

In a step S100, the processing resource 200 determines access by a hypervisor to a privileged register (on the application core 206) such as, for example, a hypervisor architecture feature trap register (CPTR_EL2), a configuration register, another type of control register or a system register. The access will be associated with a privileged instruction for setting a control bit. Access to a privileged register may be determined based on a trap which is generated when the hypervisor accesses the privileged register. This is established using architecture feature trap register (CPTR_EL3) which is used to generate a trap to EL3 privilege level when the hypervisor accesses the register CPTR_EL2, where CPTR_EL3 and CPTR_EL2 are as described in the ARM64 architecture register description which is described in the corresponding reference manuals. For example, the trap may be a privileged operation exception. In short, the Boot ROM firmware 104 would program the feature trap register such that whenever hypervisor 208 accesses the EL2 trap register an exception would be generated and delivered to the EL3 privilege level. In other words, the trap would be a monitor trap exception directed to the EL3 privilege level, i.e. in the trust zone. The BootROM executing at EL3 privilege level would emulate instruction and take necessary steps to spawn the BootROM extension.

When the access to the privileged register is determined, in a step S102, the processing resource 200 verifies the existence of a hypervisor exception vector corresponding to the hypervisor 208.

In short, the processing resource 200 checks for the existence of the hypervisor exception vector table. This would be copied by the hypervisor monitor 202 to forward exceptions to the hypervisor 208.

The verification of the existence of the hypervisor exception vector can be implemented by verifying the value of the EL2 vector base address register (EL2 VBAR) value. The boot firmware, as part of the processing resource 200, generates a magic value (in VBAR_EL2) for the EL2 vector base address register (EL2 VBAR) during initialisation. The magic value is a predefined value which is set up in the EL2 vector base address register (EL2 VBAR) and is used to identify the setup of the vector base address register (EL2 VBAR). This enables the hypervisor monitor 202 to obtain the details of the hypervisor exception vectors (e.g. the location in memory which stores the handler for a hypervisor exception). The boot firmware will only load the hypervisor monitor 202, as described below, when the EL2 vector base address register is setup by the hypervisor 208.

On verification of the existence of the hypervisor exception vector corresponding to the hypervisor 208, the processing resource 200 loads the hypervisor monitor 202 into memory local to the hypervisor 208. This is step S104. The processing resource 200 then initialises memory protection for the memory into which the hypervisor monitor 202 is loaded. This provides a security mechanism which prevents unauthorised access to the hypervisor monitor 202. This can be implemented using a resource domain controller (RDC) which configures protection for hypervisor monitor memory from any other system entity.

In a step S106, the hypervisor monitor is configured to control access to one or more privileged registers. Hypervisor monitor does this by binary translating the instructions accessing privileged registers in the hypervisor code. This enables the hypervisor monitor 202 to control access to the privileged register in the hypervisor 208.

In other words, the hypervisor monitor 202 would binary translate the hypervisor instruction which are accessing privileged registers in the hypervisor code. Privilege register access would remain with the hypervisor monitor. This includes the VBAR setup by the hypervisor monitor, which would result in all the EL2 level exceptions coming to the hypervisor monitor 202.

The next step is step S108, where one or more functions of the hypervisor 208 are assumed by the hypervisor monitor 202. One or more core functions of the hypervisor (e.g. access to the privileged register) are then controlled by the hypervisor monitor 202. That is to say, any one or more of the functions of the hypervisor 208 are then monitored and controlled by the hypervisor monitor 208. In this instance, the hypervisor 208 runs the virtual machines 212 which implement one or more application cores where, for instance, an operating system such as Windows, Linux or iOs is running. The functions which are assumed by the hypervisor monitor 202 are exception handling at hypervisor privilege level, saving and restoring of the VM virtual CPU register state on a context switch, setting up stage 2 translation page tables as per the memory region assigned to the VM, and setting up virtual machine identifier,

The assumption of the hypervisor functions by the hypervisor monitor 202 protects the virtual machines 212 from potential malicious hypervisor behaviour. This may be because the hypervisor has been infiltrated by malicious third parties or because the hypervisor is a malicious hypervisor, i.e. a hypervisor which represents a malicious third party. The assumption of the hypervisor functions by the hypervisor monitor 202 is implemented by accessing (by the hypervisor monitor 202) the code which corresponds to the assumed functionality and replacing the code by a stub (which we call a hypervisor monitor stub) which acts as a replacement for the functionality so that when the hypervisor 208 calls that functionality (e.g. VMID assignment, stage 2 page table setup), the functionality is executed by the hypervisor monitor 202. The code corresponding to the assumed functionality may be dynamically binary translated by the hypervisor monitor 202 in order to implement the corresponding stub.

The installation of the hypervisor monitor 202 and the replacement of the functionality provided by the hypervisor 208 with stubs provided by the hypervisor monitor means that, during VM execution flow if the flow reaches the monitor, requests are selectively forwarded to the hypervisor and this maintains control over the hypervisor functionality That is to say, the hypervisor monitor 202 is installed, as described above, on the hypervisor 208 and it replaces all exception vectors which are initialised by the hypervisor 208. Operations such as, for example, virtual machine exits, exception traps or secure monitor calls from a host operating system at a virtual machine would trigger the hypervisor monitor 202. The hypervisor monitor 202 would securely save the virtual machine state and selectively forward the exceptions or secure monitor call requests to the hypervisor. This would ensure the virtual machine state could never be exposed to the hypervisor, enforcing a secure and confidential computing environment.

In summary, we describe a method for securely loading a hypervisor monitor at the same level as the hypervisor (co existing at the same level without special provisions within the application core 206) and subsequently uses the same system configuration ensuring run time protection for hypervisor monitor memory. The disclosure also describes a mechanism through which a confidential compute environment can be enforced by the hypervisor thus ensuring protection of virtual machines from the hypervisor.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of deploying a hypervisor monitor, the method implemented by a processing resource, the method comprising:
determining access by a hypervisor to a privileged register;
responsive to the determination of access by the hypervisor to the privileged register, installing a hypervisor monitor by:
- verifying the instantiation of a hypervisor exception vector;
- loading the hypervisor monitor to memory on the hypervisor;
- configuring the hypervisor monitor to control access to the privileged register by storing a vector base address register value using the hypervisor monitor to enable the hypervisor monitor to control exceptions at the hypervisor privilege level;
- replacing hypervisor privilege operations with a corresponding hypervisor monitor stub.

2. A method according to Claim 1, wherein hypervisor privilege operations are:
i. Virtual machine page table setup;
ii. virtual machine identification assignment;
iii. register state save and restore operations for the virtual cpu associated with a virtual machine.

3. A method according to Claim 2, wherein the page table setup is stage 2 page table setup.

4. A method according to any preceding claim, wherein the determination of access to a privileged register comprises the determination of access to a hypervisor architecture feature trap register.

5. A method according to any preceding claim, wherein the loading of the hypervisor monitor onto memory comprises the setup of memory protection for the memory of the hypervisor monitor.

6. A method according to any preceding claim, wherein the vector base address register value is generated by the hypervisor.

7. A method according to any preceding claim, wherein the verification of the instantiation of the hypervisor exception vector comprises verification of the value of the vector base address value.

8. A method according to any preceding claim, wherein the verification comprises programming a magic value for a vector base address register during initialisation of the hypervisor monitor.

9. A method according to any preceding claim wherein replacing at least one function of the hypervisor with a corresponding hypervisor monitor stub comprises performing a dynamic binary translation of hypervisor code corresponding to the corresponding functionality of the at least one function.

10. A method according to any preceding claim, wherein installation of the hypervisor monitor is implemented by boot firmware.

11. A method according to any preceding claim, wherein the privileged register is an architecture feature trap register.

12. A method according to any preceding claim, wherein the access to a privileged register is associated with a privileged instruction.

13. A non-transitory computer readable storage medium having stored thereon executable instructions that, as a result of being executed by a processor of a computer system, cause the computer system to at least perform the method of any preceding claim.

14. A system configured to implement the method of any preceding claim.

15. A processing resource comprising a processor and memory including executable instructions that, as a result of execution by the processor, causes the reader to perform the method of any preceding claim.

## Amended claims

### Amended claims in accordance with Rule 137(2) EPC.

1. A computer-implemented method of deploying a hypervisor monitor (202), the method implemented by a processing resource (200), the method comprising:
determining (S100) access by a hypervisor (208) to a privileged register;
responsive to the determination of access by the hypervisor (208) to the privileged register, installing a hypervisor monitor (202) by:
- verifying (S102) the existence of a hypervisor exception vector;
- loading (S104) the hypervisor monitor (202) to memory local to the hypervisor (208);
- configuring (S106) the hypervisor monitor (202) to control access to the privileged register by storing a vector base address register value using the hypervisor monitor (202) to enable the hypervisor monitor (202) to control exceptions at the hypervisor privilege level;
- replacing (S108) hypervisor privilege operations with a corresponding hypervisor monitor stub;
- wherein replacing (S108) at least one function of the hypervisor (208) with a corresponding hypervisor monitor stub comprises performing a dynamic binary translation of hypervisor code corresponding to the corresponding functionality of the at least one function.

2. A method according to Claim 1, wherein hypervisor privilege operations are:
i. Virtual machine page table setup;
ii. Virtual machine identification assignment;
iii. Register state save and restore operations for the virtual CPU associated with a virtual machine.

3. A method according to Claim 2, wherein the page table setup is stage 2 page table setup.

4. A method according to any preceding claim, wherein the determination (S100) of access to a privileged register comprises the determination of access to a hypervisor architecture feature trap register.

5. A method according to any preceding claim, wherein the loading (S104) of the hypervisor monitor (202) onto memory comprises the setup of memory protection for the memory of the hypervisor monitor (202).

6. A method according to any preceding claim, wherein the vector base address register value is generated by the hypervisor (208).

7. A method according to any preceding claim, wherein the verification (S102) of the existence of the hypervisor exception vector comprises verification of the value of the vector base address value.

8. A method according to any preceding claim, wherein the verification (S102) of the existence of the hypervisor exception vector comprises programming a magic value for a vector base address register during initialisation of the hypervisor monitor (202).

9. A method according to claim 5, wherein a Resource Domain Controller configures protection of the hypervisor monitor memory (202) from any other system entity, whereby unauthorised access to the hypervisor monitor memory (202) is prevented.

10. A method according to any preceding claim, wherein installation of the hypervisor monitor (202) is implemented by boot firmware (S204).

11. A method according to any preceding claim, wherein the privileged register is an architecture feature trap register.

12. A method according to any preceding claim, wherein the access to a privileged register is associated with a privileged instruction.

13. A non-transitory computer readable storage medium having stored thereon executable instructions that, as a result of being executed by a processor of a computer system, cause the computer system to at least perform the method of any preceding claim.

14. A system configured to implement the method of any of claims 1-12.

15. A processing resource (S200) comprising a processor and memory including executable instructions that, as a result of execution by the processor, causes the reader to perform the method of any of claims 1-12.
